# EUROPEAN PATENT SPECIFICATION

(11) **EP 3 477 164 B1**
(45) Date of publication and mention of the grant of the patent: **01.04.2020**
(21) Application number: 17198187.1
(22) Date of filing: 25.10.2017
(51) Int. Cl.: F16K 1/00, C02F 1/30, F16K 5/00, F16K 25/00, F16K 27/02

(54) **VALVE FOR CONTROLLING A FLUID FLOW**
VENTIL ZUM EINSTELLEN EINES VOLUMENSTROMS
VANNE DE RÉGULATION D'UN FLUX LIQUIDE

(43) Date of publication of application: 01.05.2019
(73) Proprietor: TrennTech GmbH, 86862 Lamerdingen (DE)
(72) Inventor: Götzfried, Stefan, 86862 Lamerdingen (DE); Völk, Reinhard, 86860 Jengen (DE)
(74) Representative: Lohr, Jöstingmeier & Partner

(56) References cited:
- EP-A1- 2 980 013
- JP-A- S6 073 173
- US-A1- 2007 151 992

## Description

### Field of the invention

The invention relates to a valve for controlling a flow of a fluid. The valve has a valve housing with an outer wall defining at least a first port and a second port, a fluid channel connecting the first port to the second port and having a passage section being located between the first port and the second port. A valve member is arranged in the fluid channel for closing and opening the fluid channel.

### Description of the related art

Many different embodiments of valves of the aforementioned type are known from prior art and widely used in pipe systems for controlling a flow of a fluid.

A valve has a valve housing with an outer wall which defines at least a first port and a second port for connecting a pipe thereto, respectively. The valve housing is often as well referred to a valve body. Inside the valve housing is fluid channel. The fluid channel fluidly connects the first port to the second port. The fluid channel may have a passage section being located between the first port and the second port. The passage section must be passed by a fluid flowing from the first port through the fluid channel to the second port.

The first port and the second port of the valve may be also referred to as an inlet port and an outlet port, respectively, with respect to a direction of flow of the fluid through the valve.

Furthermore, the valve may have an elongate valve rod being supported rotatable and extending through the outer wall, a handle or some other a actuating means being secured e.g. to a free end of the valve rod outside the valve housing, and a valve member being secured to a free end of the valve rod inside the valve housing, the valve member being arranged in the fluid channel.

The valve member may have at least a blocking position and an unblocking position. In the blocking position, the valve member closes the passage section preventing the fluid from flowing through the passage section and, in the unblocking position, the valve member opens the passage section at least partially enabling the fluid to flow through the passage section.

Industrial water, process water, sanitary water, service water and the like, which can be generally referred to as raw water play an important role among the fluids to be guided in pipe systems and controlled by valves. Raw water is usually contaminated by a plurality of pathogens, hereinafter as well referred to germs which can be, for instance, molds, bacteria, parasites, alga, prions or viruses.

As long as the valve is open, the raw water flows through the pipe system and the fluid channel of the valve. Germs being contained therein cannot settle and reproduce on inner surfaces of the pipes and the valve due to the flowing of the raw water. Consequently, the germs finally leave the pipe system at a predetermined point.

There are several use cases, however, in which the valve member of the valve is almost always in the blocking position, thus preventing the raw water from flowing through the valve and the pipes connected to the first and second ports thereof. Correspondingly, the raw water in the fluid channel of the valve and the pipes stands still most of the time, i.e. there is not any movement or exchange of the raw water in the pipe system.

Generally, germs benefit from such conditions. From the contaminated raw water standing on the inlet side of the valve member, germs can settle and reproduce very easily on an inner surface of the pipe connected to the inlet port and an inner surface of an inlet side section of the fluid channel of the valve.

Even in the blocking position of the valve member a small gap remains between a first contact surface of the passage section and a second contact surface of the valve member. The gap is indeed small enough to prevent the raw water from flowing through the passage section. But it is not small enough for preventing germs of a germ population on an inner surface of the fluid channel from gradually "migrating" through the gap due to of a repeated reproduction of marginal germs.

The migration of germs through even closed valves is problematic in drinking water supply systems. These drinking water supply systems necessarily have outlets being controllable by valves. The outlets are in fluid communication with the environment and may thus be infected by germs. These germs may migrate through the valve and thereby infect the drinking water system.

Valves inhibiting a spreading of germs are disclosed by US 2007/0151992 A1, EP 2 980 013 A1 and JP S60 73173 A.

### Summary of the invention

The problem to be solved by the invention is to provide a valve of the aforementioned type which effectively inhibits germs from passing the valve member in a closed state of the valve.

Solutions of the problem are described in the independent claims. The dependent claims relate to further improvements of the invention.

The valve according to the invention has a valve housing with an outer wall defining at least a first port, a second port and a fluid channel connecting the first port to the second port. The fluid channel has a passage section being located between the first port and the second port. In many examples, the passage section is formed to provide a valve seat.

The fluid channel is inside the valve housing and provides a fluid connection between the first port and the second port, i.e. a fluid communication between said ports if the valve is open. If the valve is closed, the fluid communication is interrupted and in this sense blocked. Depending on the direction of flow of the fluid through the valve the first port may be referred to as an inlet port and the second port may be referred to as an outlet and vice versa.

Opening and closing of the valve is obtained by moving a valve member, being movably supported enabling a movement at least between an unblocking position and a blocking position, which will be explained in more detail further below. In the examples having a valve seat, the valve member closes the seat in its blocking position and at least partially opens it in the unblocking position.

The valve according to the invention has an elongate valve rod, often as well referred to a valve stem. The optional valve rod may be movably supported, e.g. supported rotatable about a rotational axis. The valve rod may extend through the outer wall (mostly with sealing in between of the housing and the valve rod). The movement of the valve rod may be controlled by a handle or some other actuation means (e.g. an actuator, like an electric drive, a pneumatic actuator or the like) being coupled to the valve rod. Thus the valve rod can be considered as an example for a transmission between actuation means and the valve member. In many applications, the actuation means may e.g. be attached e.g. to a free end of the valve rod outside the valve housing. The valve member may be attached to the valve rod inside the valve housing, for example to another end of the valve rod. The valve rod transmits a movement of the actuation means to the valve rod. For example, by turning a handle about the rotational axis the valve member is rotates equally. Alternatively the valve rod may transmit a linear movement of a linear actuator. The valve member may additionally or alternatively be displaced along the rotational axis if the valve rod is configured as a spindle corresponding to a thread being integral with or attached to the valve housing. As apparent from the above, the term handle will be used throughout the application as an example for essentially any actuation means.

The valve member is arranged in the passage section and has at least said blocking position and said unblocking position. In the blocking position, the valve member closes the passage section preventing the fluid from flowing through the passage section and, in the unblocking position, the valve member opens the passage section at least partially enabling a fluid to flow through the passage section. The valve member may have intermediate positions for enabling a reduced fluid flow.

In the blocking position of the valve member a fluid flow from the first port to the second port is prevented, i.e. a fluid communication between the first port and the second port is blocked by the valve member. In the unblocking position of the valve member, however, a fluid flow from the first port to the second port is enabled, i.e. a fluid communication between the first port and the second port is established.

Movement of the valve member is controlled (or effected) by some actuating means (as well simply actuator), which may be any mechanism or device to automatically or remotely control a valve from outside the body. In the simplest case the valve member is mechanically coupled to a handle. In other examples some kind of drive like an electric motor, a linear drive, a pneumatic drive, a hydraulic drive or the like may be mechanically coupled to the valve member move it from the unblocking into the blocking position and/or vice versa. As usual the term "mechanically coupled" means that a transmission of a movement (or at least a force or a angular moment, respectively) takes place via the mechanical coupling. The mechanical coupling according to the invention is via a valve rod.

Some valves have neither handle nor other kind of actively controlled actuator because they automatically control themselves from inside; for example, check valves and relief valves may have neither. In these examples, the valve member is often spring loaded against a valve seat by some elastic means (like e.g. a valve spring, but as well pneumatic 'spring' loading may be used.) Said elastic means can thus be considered as an actuation means. If the fluid pressure is reduced the elastic means forces the valve member into the blocking position. Other valves are temperature controlled, in this case thermal expansion (or shrinkage) of an actuation means may control the position of the valve member and thereby open or close the passage section by accordingly moving the valve member.

The valve has at least one radiating element with a radiating surface. The radiating surface is arranged and configured to irradiate at least a surface portion of the passage section and/or a surface portion of the valve member with an electromagnetic radiation for inhibiting a spreading of germs thereon.

For example the radiating surface may irradiate a valve seat and/or a surface of a valve member facing the corresponding valve seat. The at least one radiating element may comprise glass, silicone or a transparent plastic material. In a preferred embodiment, the irradiating element is integrated in the valve member.

The electromagnetic radiation may be e.g. ultraviolet light, preferably UV-C light may be used. Other germicide radiation may be used as well, like e.g. X-ray or IR radiation. The publications in this field are numerous, but for example use of broad band UV-light for killing germs in drinking water and/or preventing their replication is summarized i.a. in EP1084080B1 and the documents cited therein. At this point it should be noted that the intensity of the light may be chosen to kill the germs, as this definitively inhibits spreading of germs. But as the migration of the germs is not due to their translation, but an effect of population growth it is sufficient if the electromagnetic radiation inhibits the germ's reproduction.

Preferably an irradiated surface portion of the passage section and/or an irradiated surface portion of the valve member define a gap between the valve member and the passage section and/or on a downstream side of the valve member with respect to a direction of flow of the fluid. In other words, the irradiated surface portion provides at least a part of a boundary of a gap being formed in between of the valve member and the passage section. In some examples, the gap can be open in the unblocking position and can be closed in the blocking position of the valve member. Thus, germs or other pathogens will be prevented from reproducing itself in the gap or in case reproduction takes place to leave the gap and reach the downstream side of the valve member due to a reproduction of a marginal germ of a population being settled in the gap between the passage section and the valve member. Consequently, a spreading of the population of germs into the downstream section of the fluid channel is inhibited.

The valve has at least one electromagnetic wave guide being connected to the at least one radiating element for guiding the electromagnetic radiation thereto. The at least one electromagnetic wave guide comprises an optical fiber or a liquid light guide. These are common means for guiding electromagnetic waves. Of course, the connection between the electromagnetic wave guide and the radiating element is an electromagnetic connection which is essentially different from a fluid connection. The electromagnetic connection enables an electromagnetic wave leaving the electromagnetic wave guide to pass over into the radiating element. In this sense the electromagnetic radiation may be coupled from the wave guide into the radiating element.

The at least one radiating element is attached to or integral with a surface portion of the valve member wherein the at least one electromagnetic wave guide extends through the valve rod, the valve rod being a hollow rod. The valve member may be configured to be itself the radiating element. Alternatively the radiating element may be a separate element either being put on a surface portion of the valve member, thus protruding from the surface of the valve member, or being inserted into a recess of a surface portion of the valve member. The valve rod is configured as a hollow rod for accommodating the electromagnetic wave guide or even be configured as wave guide. In case of UV-C, for example, the hollow portion of the rod may be coated with Aluminum to thereby obtain a UV-C waveguide.

An electromagnetic wave travelling through the electromagnetic wave guide, hence, can easily reach the radiating element.

In some examples which are not part of the invention, the at least one radiating element and/or another radiating element is be attached to or integral with a surface portion of the passage section wherein the at least one electromagnetic wave guide extends through the valve housing. For instance, the electromagnetic wave guide may pass through a plug closing a vent hole or a drain hole of the valve being located downstream in the passage section. In case the radiating element is attached to an inner surface of the plug, an electromagnetic wave travelling through the electromagnetic wave guide can easily reach the radiating element.

In these examples, the at least one radiating element may have an annular radiating surface surrounding the passage section. Again, the radiating element may be either put on a surface portion of the passage section, thus protruding from the passage section, or inserted into a recess of a surface portion of the passage section. The annular shape of the radiating surface does not allow any migration path for germ migration.

The at least one electromagnetic wave guide may comprise an entry surface, an exit surface and an electromagnetic wave path connecting the exit surface to the entry surface, wherein the exit surface may be configured to provide the at least one radiating element with the electromagnetic radiation. Preferably, the exit surface is a surface portion of the at least one radiating element. The electromagnetic wave guide and the radiating element may be in one piece or spliced to one another.

The at least one electromagnetic wave guide and the at least one radiating element may be configured to guide and radiate UV light, respectively. In the electromagnetic spectrum, the invisible UV light is located between the visible light which may be referred to as optical electromagnetic radiation and the x-ray light. Accordingly, UV light has a wave length in the range from 380 nm to 10 nm. Electromagnetic radiation having a wave length in this range can effectively prevent germs from reproduction.

The passage section and/or the valve member may comprise a sealing element being disposed in a surface portion of the passage section and/or a surface portion of the valve member, respectively. The sealing element may be inserted into a groove extending in a surface portion of the passage section and/or a surface portion of the valve member, respectively. Sealing elements can improve the fluid tightness of the valve.

The passage section may comprise and/or define a valve seat having a first surface portion and the valve member may comprise a valve disc having a second surface portion abutting the first surface portion in the blocking position thereby closing the passage and being distant from the first surface portion in the unblocking position thereby at least partially opening the passage. The second surface portion may be complementary to the first surface portion. For instance, the valve may be an angle seat valve, particularly a pressure relief valve having an expandable spring being disposed between and being supported by the valve disc and the valve housing.

Alternatively, the passage section may be configured as a rotationally symmetric cavity having a first surface portion and the valve member may comprise a rotationally symmetric blocking body being accommodated in the rotationally symmetric cavity and having a second surface portion abutting the first surface portion in any angular position of the rotationally symmetric body, the rotationally symmetric body having a bore being closed by the first surface portion in the blocking position and being open in the unblocking position. A valve of this type usually requires just a quarter turn of the handle between the open state and the closed state. The valve member meanwhile only rotates and is not displaced along the rotational axis. A valve of this type may be referred to as stopcock.

Particularly, the rotationally symmetric cavity may have a spherical shape and the rotationally symmetric blocking body is a ball. Accordingly, a valve of this type is usually referred to as ball valve which may be operated by means of a lever. In a different embodiment, the rotationally symmetric cavity may have a cone shape or a truncated cone shape and the rotationally symmetric blocking body is a cone or a truncated cone, respectively.

In still another embodiment, the passage section may have an annular first surface portion and the valve member may comprise a valve flap having a peripheral second surface portion abutting the first surface portion in the blocking position thereby closing the passage and being distant from the first surface portion in the unblocking position thereby at least partially opening the passage. Again, a valve of this type just requires a quarter turn of the handle between the open state and the closed state. The valve member meanwhile only rotates and is not displaced along the rotational axis. A valve of this type may be referred to as stopcock.

The invention further provides a method for inhibiting a spreading of germs in a valve according to the invention.

The method comprises the steps:
- Radiating an electromagnetic radiation by means of the at least one radiating element; and
- Directing the electromagnetic radiation onto a surface portion of a passage section of fluid channel of a valve and/or onto a surface portion of the valve member.

These steps enable to inhibit a migration of germ populations along the passage section and/or the valve member, respectively. Accordingly, a migration of germs through a closed valve from a first port to a second port of the valve can be prevented. Germ populations usually settle on surfaces and spread by reproduction, thus effectively performing a migration. Germs can be effectively prevented from reproduction by electromagnetic radiation, however.

The method further comprises the steps:
- Connecting at least one electromagnetic wave guide to an electromagnetic radiation source;
- Operating the electromagnetic radiation source for generating electromagnetic radiation;
- Concentrating and/or collimating the generated electromagnetic radiation;
- Guiding the concentrated and/or collimated electromagnetic radiation to the radiating element by means of the at least one electromagnetic wave guide.

Preferably, the method comprises operating the electromagnetic radiation source in a pulsed mode, wherein particularly one or more defined periods of a continuous operation of the electromagnetic radiating source are optionally provided. A pulsed mode operation of the electromagnetic radiation source may on the one hand be sufficient for inhibiting a spreading of germs. On the other hand, a pulsed mode operation of the electromagnetic radiation source requires less energy and enables to use efficiently use batteries for operating the radiation source, e.g. an UV-tube.

Even more preferably, the method comprises generating UV light by means of a UV light source and particularly by concentrating the UV light by means of a parabolic reflector. UV light sources are well established, widely available and easy to handle. Germs can be effectively prevented from reproduction by means of UV light.

For simplicity only, gaskets have almost not been mentioned above, but of course they need to be inserted where appropriate. The irradiated surfaces may be a gasket surfaces, e.g. if the valve member comprises a corresponding gasket to avoid leakage when in its blocking position. Of course at least a surface portion of the passage section may be configured as a gasket being optionally irradiated as explained above.

As well for simplicity only, the invention was explained with respect to two-port valves. But of course the valve according to the invention may be multi-port valve, i.e. have a three or more ports. Like the two-port valves explained above (and below) each multi-port valve has at least a valve housing with an outer wall defining at least a first port and a second port for a fluid (and a number of additional ports). As well a fluid channel connecting the first port to the second port and having a passage section being located between the first port and the second port is common for multi-port valves. Fluid connection between the different ports is controlled by moving at least one valve member as explained above.

### Description of Drawings

In the following the invention will be described by way of example, without limitation of the general inventive concept, on examples of embodiment with reference to the drawings.
Figure 1 shows a schematic cross-sectional top view of a ball valve according to an embodiment of the invention both in a closed state and in an open state;
Figure 2 shows a cross-sectional side view of the ball valve shown in figure 1;
Figure 3 shows a schematic cross-sectional side view of a stopcock according to an embodiment of the invention;
Figure 4 shows a schematic cross-sectional side view of a valve according to an embodiment of the invention;
Figure 5 shows a schematic cross-sectional side view of a valve according to an embodiment of the invention;
Figure 6 shows a cross-sectional side view of the valve shown in figure 5;
Figure 7 shows a cross-sectional side view of the valve shown in figure 5;
Figure 8 shows a cross-sectional side view of an angle seat valve according to an example which is not part of the present invention; and
Figure 9 shows a schematic cross-sectional side view of a valve according to an embodiment of the invention.

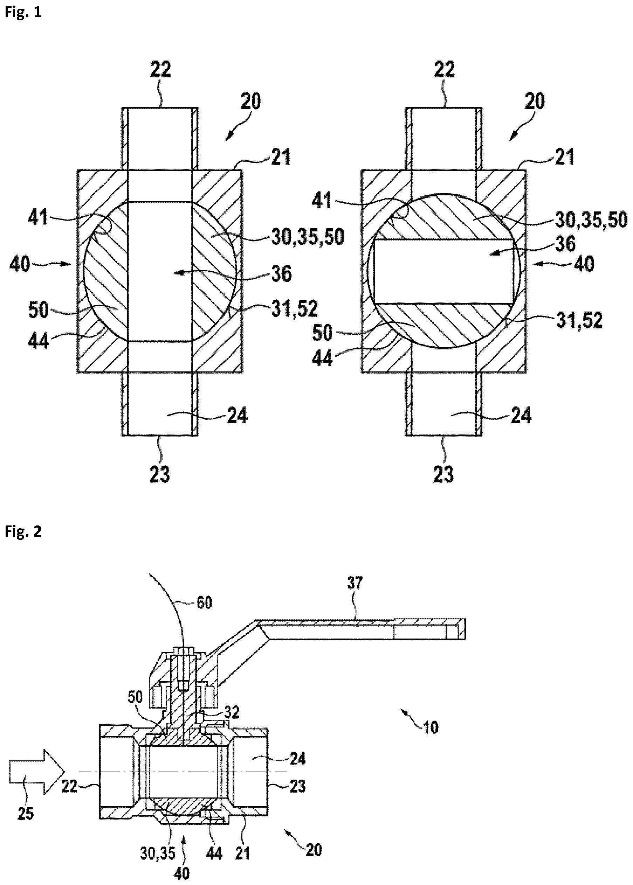

Figures 1 and 2 show a preferred first embodiment of a valve 10 according to the invention for controlling a flow of a fluid. The valve 10 is configured as a ball valve and has a valve housing 20 with an outer wall 21 defining a first port 22, a second port 23 and a fluid channel 24. The fluid channel 24 connects the first port 22 to the second port 23 and has a passage section 40 which is located between the first port 22 and the second port 23 and configured as a spherical cavity having an inner first surface portion 41.

Furthermore, the valve 10 has an elongate hollow valve rod 32 being supported rotatable about a rotational axis by a bearing formed by the housing 20 and extending through the outer wall 21, a handle 37 being configured as a lever being secured to a free end of the valve rod 32 outside the valve housing 20, and a valve member 30 which comprises a blocking member 35 having a second surface 31 and being formed as a ball with a bore 36. Of course the bearing is not necessarily formed or defined by the housing alone. For example a bearing sleeve or some other bearing means may be positioned between the rod and the housing wall. A gasket may as well be provided.

The valve member 30 is arranged in the passage section 40 and rotatable accommodated in the spherical cavity. The second surface portion 31 of the valve member 30 abuts the first surface portion 41 of the passage section 40 in any angular position of the valve member 30.

The valve member 30 has a blocking position and an unblocking position whose angular positions differ in this example by a quarter turn (other angular differences are possible as well). In the blocking position, the bore 36 is closed by the first surface portion 41. Hence, the valve member 30 closes the passage section 40 preventing the fluid from flowing through the passage section 40. In the unblocking position, the bore 36 is open and fluidly connected to the fluid channel 24. Thus, the valve member 30 opens the passage section 40 enabling the fluid to flow through the passage section 40.

In this example, the valve member 30 is configured as a radiating element 50 made from a transparent plastic material. The radiating element 50 may have a radiating surface 52 (as depicted) and may be arranged and configured to irradiate the surface portion 41 of the passage section 40 with an electromagnetic radiation for inhibiting a spreading of germs thereon. The irradiated surface portion 41 of the passage section 40 is located in a gap between the valve member 30 and the passage section 40. As already explained above, located in the gap means here that the irradiated surface portion 41 of the passage section 40 defines (at least partially) a boundary of the gap between the passage section 40 and the valve member.

The valve 10 further has an electromagnetic wave guide 60 comprising an optical fiber and being connected to the radiating element 50 by way of splicing and extending through the valve rod 32 for guiding the electromagnetic radiation to the radiating element 50. Both the electromagnetic wave guide 60 and the radiating element 50 are configured to guide and radiate UV light, respectively.

For operating the valve 10 the electromagnetic wave guide 60 is connected to a UV light source (not shown). During operation of the valve 10 the UV light source may be operated in a pulsed mode thus generating pulsed UV light. The pulsed UV light may be concentrated by a parabolic reflector (not shown) and forwarded to an entry surface of the electromagnetic wave guide 60. In the electromagnetic wave guide 60, the UV light propagates to the radiating element 50 which radiates the UV light directed to the first surface portion 41 of the passage section 40.

Of course, one or more defined periods of a continuous operation of the UV light source may be optionally provided. This might be adequate for example when the valve 10 is going to work for the first time after installation or repeatedly at defined intervals during operation in order to increase the germ inhibiting effect.

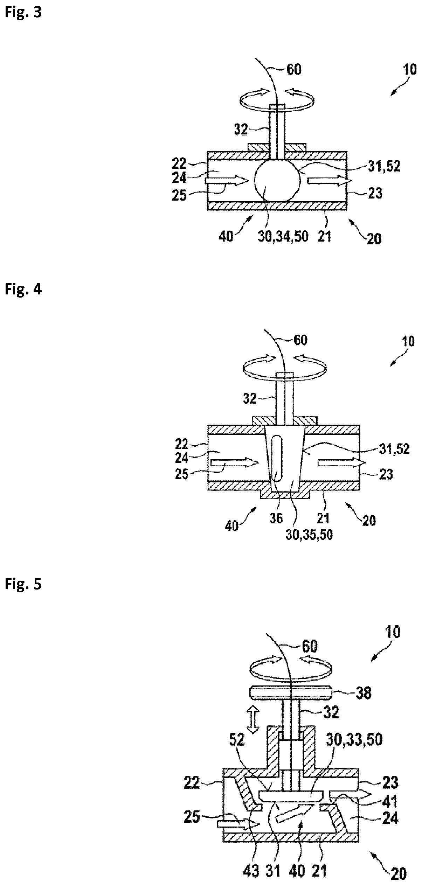

Figure 3 shows a second embodiment of a valve 10 according to the invention for controlling a flow of a fluid. The valve 10 differs from the first embodiment by having a valve member 30 comprising a rotatable valve flap 34. Accordingly, the valve member 30 has a peripheral second surface portion 31 abutting an annular first surface portion 41 of the passage section 40 in the blocking position of the valve member 30 and being distant from the annular first surface portion 41 of the passage section 40 in the unblocking position.

Figure 4 shows a third embodiment of a valve 10 according to the invention for controlling a flow of a fluid. The valve 10 differs from the first embodiment by having a valve member 30 comprising a blocking body 35 being shaped as a truncated cone.

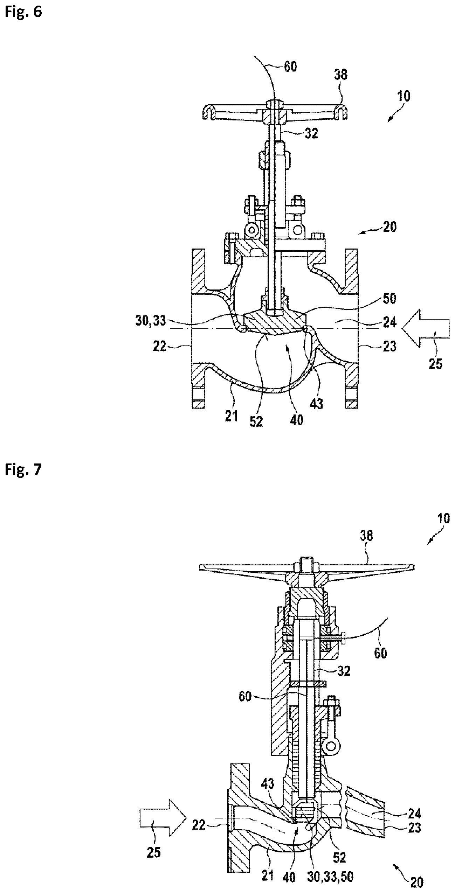

Figures 5 and 6 show a forth embodiment and a fifth embodiment of a valve 10 according to the invention for controlling a flow of a fluid, respectively. The valve 10 differs from the embodiments shown in figures 1 to 4 by that the passage section 40 comprises a valve seat 43 having a first surface portion 41 and the valve member 30 comprises a valve disc 33 having a second surface portion 31 abutting the first surface portion 41 in the blocking position and being distant from the first surface portion 41 in the unblocking position. Another difference results from the valve rod 32 which is configured as a spindle corresponding to a thread (not shown) being integral with or attached to the valve housing 20 and from a rotary handle 38 being secured to the outer free end of the valve rod 32. Correspondingly, the valve member 30 is gradually displaced along the rotational axis when the rotary handle 38 is operated.

Figure 7 shows a sixth embodiment of a valve 10 according to the invention for controlling a flow of a fluid. The valve 10 differs from the embodiments shown in figures 5 and 6 by that the electromagnetic wave guide 60 comprises two parts one of which extends laterally through the outer wall 21 of the valve housing 20 while the other one extends through the partly hollow valve rod 32. Correspondingly, the partly hollow valve rod 32 comprises a disc-like electromagnetic coupling element which is electromagnetically connected to the electromagnetic wave guide part extending through the hollow valve rod 32 and pointed to by the electromagnetic wave guide part extending laterally.

The sixth embodiment may be varied by providing a two-part valve rod 32 with a rotating joint between the two parts. While the upper part of the valve rod 32 can be rotated by turning the rotary handle 38 in the usual way, the lower part of the valve rod 32 is preferably prevented from rotation by complementary radial protrusions and recesses of the valve rod 32 and the valve housing 20, respectively. With this modification, the electromagnetic wave guide 60 may be provided in one piece without any need for an electromagnetic coupling element.

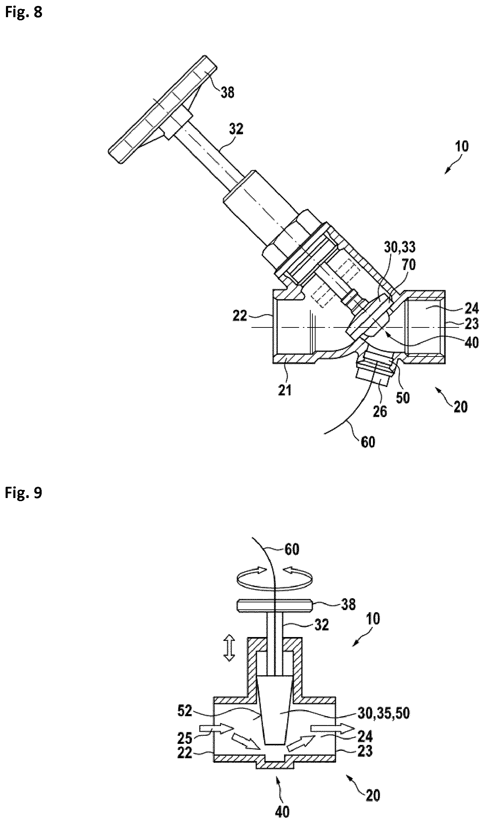

Figure 8 shows an example of a valve 10, which is not part of the present invention, for controlling a flow of a fluid. The valve 10 is configured as an angle seat valve having an angle of about 45° between the rotational axis of the valve rod 32 and a direction of flow of the fluid. The valve 10 further differs from the embodiments shown in figures 5 to 7 by that the electromagnetic wave guide 60 extends through a plug accommodated in a drain hole 26 which is located downstream from the passage section 40 and the valve member 30 related to a direction of flow of the fluid. A radiating element 50 is attached to an inner surface of the plug for radiating UV light such that downstream surface portions 31, 41 of the valve member 30 and the passage section 40, respectively, are irradiated by the UV light.

Figure 9 shows a seventh embodiment of a valve 10 according to the invention for controlling a flow of a fluid. The valve 10 is very similar to the embodiment shown in figure 4 and differs therefrom by that the valve member 10 comprises a blocking body 35 without a bore 36. Correspondingly, the valve rod 32 is configured as a spindle in order to displace the blocking body 35 along the rotational axis between an unblocking position and a blocking position.

The valve 10 according to the invention has the advantage of inhibiting a spreading of germs and, thus, preventing germs from migrating through the valve 10 in a closed state of the valve 10. This is achieved by irradiating surface portions 41, 31 of a passage section 40 and/or a valve member 30 of the valve with electromagnetic radiation, i.e. UV light. The electromagnetic radiation is radiated by a radiating element 50 which is electromagnetically connected to an electromagnetic wave guide 60 providing electromagnetic radiation to the radiating element 50.

### List of reference numerals

- 10: valve
- 20: valve housing
- 21: outer wall
- 22: first port
- 23: second port
- 24: fluid channel
- 25: direction of flow
- 26: drain hole
- 30: valve member
- 31: surface portion
- 32: valve rod
- 33: valve disc
- 34: valve flap
- 35: blocking body
- 36: bore
- 37: lever
- 38: rotary handle
- 40: passage section
- 41: surface portion
- 43: valve seat
- 44: cavity
- 50: radiating element
- 52: radiating surface
- 60: electromagnetic wave guide
- 70: sealing element

## Claims

1. A valve (10) for controlling a flow of a fluid, having
- a valve housing (20) with
∘ an outer wall (21) defining at least a first port (22) and a second port (23) for a fluid, and
∘ a fluid channel (24) connecting the first port (22) to the second port (23) and having a passage section (40) being located between the first port (22) and the second port (23),
- a valve member (30) inside the valve housing (20), the valve member (30) being arranged in the fluid channel (24) and having at least a blocking position and an unblocking position wherein the valve member (30),
∘ in the blocking position, closes the passage section (40) preventing the fluid from flowing through the passage section (40) and,
∘ in the unblocking position, opens the passage section (40) at least partially enabling the fluid to flow through the passage section (40),
- actuation means (37, 38) being mechanically coupled to the valve member for controlling a movement of the valve member (30),
wherein
the valve (10) has at least one radiating element (50) having a radiating surface (52) and being arranged and configured to irradiate a surface portion (41) of the passage section (40) and/or a surface portion (31) of the valve member (30) with an electromagnetic radiation for inhibiting a spreading of germs thereon, and wherein at least one electromagnetic wave guide (60) is connected to the at least one radiating element (50) for guiding the electromagnetic radiation thereto, the at least one electromagnetic wave guide (60) comprising an optical fiber or a liquid light guide,
**characterized in that** the at least one radiating element (50) is attached to or integral with a surface portion (31) of the valve member (30) wherein the at least one electromagnetic wave guide (60) extends through a valve rod (32) for mechanically coupling the actuation means (37, 38) with the valve member (30), the valve rod (32) being a hollow rod.

2. The valve according to claim 1,
**characterized in that**
an irradiated surface portion (41) of the passage section (40) and/or an irradiated surface portion (31) of the valve member (30) is located in a gap between the valve member (30) and the passage section (40) and/or on a downstream side of the valve member (30) with respect to a direction of flow (25) of the fluid.

3. The valve according to one of claims 1 or 2, **characterized in that**
the at least one electromagnetic wave guide (60) comprises an entry surface, an exit surface and an electromagnetic wave path connecting the exit surface to the entry surface, wherein the exit surface is configured to provide the at least one radiating element (50) with the electromagnetic radiation and particularly is a surface portion of the at least one radiating element (50).

4. The valve according to one of claims 1 to 3, **characterized in that**
the at least one electromagnetic wave guide (60) and the at least one radiating element (50) are configured to guide and radiate UV light, respectively.

5. The valve according to one of the preceding claims, **characterized in that**
the passage section (40) and/or the valve member (30) comprises a sealing element (70) being disposed in a surface portion (41) of the passage section (40) and/or a surface portion (31) of the valve member (30), respectively, particularly being inserted into a groove extending in a surface portion (41) of the passage section (40) and/or a surface portion (31) of the valve member (30), respectively.

6. The valve according to one of the preceding claims, **characterized in that**
the passage section (40) comprises a valve seat (43) having a first surface portion (41) and the valve member (30) comprises a valve disc (33) having a second surface portion (31) abutting the first surface portion (41) in the blocking position thereby closing the passage section (40) and being distant from the first surface portion (41) in the unblocking position thereby at least partially opening the passage section (40).

7. The valve according to one of claims 1 to 5, **characterized in that**
the passage section (40) is configured as a rotationally symmetric cavity (44) having a first surface portion (41) and the valve member (30) comprises a rotationally symmetric blocking body (35) being accommodated in the rotationally symmetric cavity (44) and having a second surface portion (31) abutting the first surface portion (41) in any angular position of the rotationally symmetric body (35) the rotationally symmetric body (35) having a bore (36) being closed by the first surface portion (41) in the blocking position and being open in the unblocking position.

8. The valve according to claim 7, **characterized in that**
the rotationally symmetric cavity (44) has a spherical shape and the rotationally symmetric blocking body (35) is a ball or the rotationally symmetric cavity (44) has a cone shape or a truncated cone shape and the rotationally symmetric blocking body (35) is a cone or a truncated cone, respectively.

9. The valve according to one of claims 1 to 5, **characterized in that**
the passage section (40) has an annular first surface portion (41) and the valve member (30) comprises a valve flap (34) having a peripheral second surface portion (31) abutting the first surface portion (41) in the blocking position thereby closing the passage section (40) and being distant from the first surface portion (41) in the unblocking position thereby at least partially opening the passage section (40).

10. A method for inhibiting a spreading of germs in a valve (10) according to one of the preceding claims, **characterized by** the steps:
- Radiating an electromagnetic radiation by means of the at least one radiating element (50);
- Directing the electromagnetic radiation onto the surface portion (41) of the passage section (40) and/or onto the surface portion (31) of the valve member (30);
- Connecting the at least one electromagnetic wave guide (60) to an electromagnetic radiation source, the electromagnetic wave guide (60) extending through the hollow valve rod of the valve (10);
- Operating the electromagnetic radiation source for generating electromagnetic radiation;
- Concentrating and/or collimating the generated electromagnetic radiation; and
- Guiding the concentrated and/or collimated electromagnetic radiation to the radiating element (50) by means of the at least one electromagnetic wave guide (60).

11. The method claim 10, **characterized by**
operating the electromagnetic radiation source in a pulsed mode, wherein particularly one or more defined periods of a continuous operation of the electromagnetic radiating source are optionally provided.

12. The method of one of claims 10 to 11, **characterized by**
generating UV light by means of a UV light source and particularly by means of a light emitting diode (LED) and/or concentrating the UV light by means of a parabolic reflector.

## Patentansprüche

1. Ein Ventil (10) zum Steuern eines Fluidstroms mit
- einem Ventilgehäuse (20) mit
∘ einer Außenwand (21), die mindestens einen ersten Port (22) und einem zweiten Port (23) für ein Fluid definiert, und
∘ einem Fluidkanal (24), der den ersten Port (22) mit dem zweiten Port (23) verbindet und einen Durchgangsabschnitt (40) aufweist, der zwischen dem ersten Port (22) und dem zweiten Port (23) angeordnet ist,
- einem Ventilelement (30) innerhalb des Ventilgehäuses (20), wobei das Ventilelement (30) im Fluidkanal (24) angeordnet ist und mindestens eine Blockierposition und eine Freigabeposition aufweist, wobei das Ventilglied (30)
∘ in der Blockierposition den Durchgangsabschnitt (40) schließt, um zu verhindern, dass das Fluid durch den Durchgangsabschnitt (40) fließt, und
∘ in der Freigabeposition den Durchgangsabschnitt (40) zumindest teilweise öffnet, damit das Fluid durch den Durchgangsabschnitt (40) fließen kann,
- Betätigungsmittel (37, 38), die mechanisch mit dem Ventilelement gekoppelt sind, um eine Bewegung des Ventilelements (30) zu steuern,
wobei
das Ventil (10) mindestens ein Strahlungselement (50) hat, welches eine Strahlungsoberfläche (52) hat und angeordnet und ausgestaltet ist, um einen Oberflächenabschnitt (41) des Durchgangsabschnitts (40) und/oder einen Oberflächenabschnitt (31) des Ventilelements (30) mit einer elektromagnetischen Strahlung zu bestrahlen, um eine Ausbreitung von Keimen darauf zu verhindern,
und wobei
mindestens ein elektromagnetischer Wellenleiter (60) mit dem mindestens Strahlungselement (50) verbunden ist, um die elektromagnetische Strahlung dorthin zu führen, wobei der mindestens eine elektromagnetische Wellenleiter (60) eine Lichtleitfaser oder einen Flüssigkeitslichtleiter umfasst,
**dadurch gekennzeichnet, dass**
das mindestens eine Strahlungselement (50) an einem Oberflächenabschnitt (31) des Ventilelements (30) befestigt ist oder einstückig damit ist, wobei der mindestens eine elektromagnetische Wellenleiter (60) sich durch eine Ventilstange (32) erstreckt, um die Betätigungsmittel (37, 38) mit dem Ventilelement (30) mechanisch zu koppeln, wobei die Ventilstange (32) eine Hohlstange ist.

2. Ventil nach Anspruch 1,
**dadurch gekennzeichnet, dass**
ein bestrahlter Oberflächenabschnitt (41) des Durchgangsabschnitts (40) und/oder ein bestrahlter Oberflächenabschnitt (31) des Ventilelements (30) in einer Lücke zwischen dem Ventilelement (30) und dem Durchlassabschnitt (40) und/oder auf einer stromabwärtigen Seite des Ventilelements (30) in Bezug auf eine Strömungsrichtung (25) des Fluids angeordnet ist.

3. Das Ventil nach Anspruch 1 oder 2,
**dadurch gekennzeichnet, dass**
der mindestens eine elektromagnetische Wellenleiter (60) eine Eingangsoberfläche, eine Ausgangsoberfläche und einen elektromagnetischen Wellenpfad hat, welcher die Ausgangsoberfläche mit der Eingangsoberfläche verbindet, wobei die Ausgangsoberfläche konfiguriert ist, um mindestens ein Strahlungselement (50) mit elektromagnetischer Strahlung zu versorgen und insbesondere ein Oberflächenabschnitt des mindestens einen Strahlungselements (50) ist.

4. Das Ventil nach einem der Ansprüche 1 bis 3,
**dadurch gekennzeichnet, dass**
der mindestens eine elektromagnetische Wellenleiter (60) und das mindestens eine Strahlungselement (50) konfiguriert sind zum Leiten bzw. Abstrahlen von UV-Licht.

5. Das Ventil nach einem der vorhergehenden Ansprüche,
**dadurch gekennzeichnet, dass**
der Durchgangsabschnitt (40) und/oder das Ventilelement (30) ein Dichtelement (70) aufweisen, welches in einem Oberflächenabschnitt (41) des Durchgangsabschnitts (40) und/oder einem Oberflächenabschnitt (31) des Ventilelements (30) angeordnet ist, bzw. insbesondere in eine Nut eingesetzt ist, die sich in einen Oberflächenabschnitt (41) des Durchgangsabschnitts (40) und/oder einen Oberflächenabschnitt (31) des Ventilelements (30) erstreckt.

6. Das Ventil nach einem der vorhergehenden Ansprüche,
**dadurch gekennzeichnet, dass**
der Durchgangsabschnitt (40) einen Ventilsitz (43) mit einem ersten Oberflächenabschnitt (41) aufweist und das Ventilelement (30) einen Ventilteller (33) mit einem zweiten Oberflächenabschnitt (31) aufweist, der in der Blockierposition an den ersten Oberflächenabschnitt (41) anstößt, wodurch der Durchgangsabschnitt (40) geschlossen wird und von dem ersten Oberflächenabschnitt (41) in der Freigabeposition entfernt ist, wodurch der Durchgangsabschnitt (40) zumindest teilweise geöffnet wird.

7. Das Ventil nach einem der Ansprüche 1 bis 5,
**dadurch gekennzeichnet, dass**
der Durchgangsabschnitt (40) als rotationssymmetrischer Hohlraum (44) mit einem ersten Oberflächenabschnitt (41) ausgebildet ist und das Ventilelement (30) einen rotationssymmetrischen Blockierkörper (35) aufweist, welcher in dem rotationssymmetrischen Hohlraum (44) aufgenommen ist und einen zweiten Oberflächenabschnitt (31) aufweist, der an den ersten Oberflächenabschnitt (41) in jedweder beliebigen Winkelposition des rotationssymmetrischen Körpers (35) anstößt, wobei der rotationssymmetrische Körper (35) eine Bohrung (36) hat, die durch den ersten Oberflächenabschnitt (41) in der Blockierposition verschlossen ist und in der Freigabeposition offen ist.

8. Das Ventil nach Anspruch 7,
**dadurch gekennzeichnet, dass**
der rotationssymmetrische Hohlraum (44) eine Kugelform hat und der rotationssymmetrische Blockierkörper (35) ein Ball ist oder der rotationssymmetrische Hohlraum (44) eine Kegelform oder eine Kegelstumpfform hat und der rotationssymmetrische Blockierkörper (35) ein Kegel bzw. ein Kegelstumpf ist.

9. Das Ventil nach einem der Ansprüche 1 bis 5,
**dadurch gekennzeichnet, dass**
der Durchgangsabschnitt (40) einen ringförmigen ersten Oberflächenabschnitt (41) aufweist und das Ventilelement (30) eine Ventilklappe (34) mit einem peripheren zweiten Oberflächenabschnitt (31) aufweist, welcher in der Blockierposition an den ersten Oberflächenabschnitts (41) anstößt, wodurch der Durchgangsabschnitt (40) geschlossen wird und in der Freigabeposition von dem ersten Oberflächenabschnitt (41) entfernt ist, wodurch der Durchgangsabschnitt (40) zumindest teilweise geöffnet wird.

10. Ein Verfahren zum Verhindern einer Ausbreitung von Keimen in einem Ventil (10) nach einem der vorhergehenden Ansprüche,
**gekennzeichnet durch** die folgenden Schritte:
- Ausstrahlen einer elektromagnetischen Strahlung mittels des mindestens einen Strahlungselements (50);
- Richten der elektromagnetischen Strahlung auf den Oberflächenabschnitt (41) des Durchgangsabschnitts (40) und/oder auf den Oberflächenabschnitt (31) des Ventilelements (30);
- Verbinden des mindestens einen elektromagnetischen Wellenleiters (60) mit einer elektromagnetischen Strahlungsquelle, wobei sich der elektromagnetische Wellenleiter (60) durch die hohle Ventilstange des Ventils (10) erstreckt;
- Betreiben der elektromagnetischen Strahlungsquelle zum Erzeugen elektromagnetischer Strahlung;
- Konzentrieren und/oder Kollimieren der erzeugten elektromagnetischen Strahlung; und
- Führen der konzentrierten und/oder kollimierten elektromagnetischen Strahlung zum Strahlungselement (50) mittels des mindestens einen elektromagnetischen Wellenleiters (60).

11. Das Verfahren nach Anspruch 10,
**gekennzeichnet durch** einen gepulsten Betrieb der elektromagnetischen Strahlungsquelle, wobei insbesondere eine oder mehrere definierte Perioden eines kontinuierlichen Betriebs der elektromagnetischen Strahlungsquelle gegebenenfalls vorgesehen sind.

12. Verfahren nach einem der Ansprüche 10 bis 11,
**gekennzeichnet durch** Erzeugen von UV-Licht mittels einer UV-Lichtquelle und insbesondere mittels eine lichtemittierenden Diode (LED) und/oder Konzentrieren des UV-Lichts mittels eine parabolischen Reflektors.

## Revendications

1. Soupape (10) pour commander un écoulement d'un fluide, ayant
- un logement de soupape (20) avec
∘ une paroi extérieure (21) définissant au moins une première lumière (22) et une seconde lumière (23) pour un fluide, et
∘ un canal de fluide (24) reliant la première lumière (22) à la seconde lumière (23) et dont une section de passage (40) est située entre la première lumière (22) et la seconde lumière (23),
- un organe de soupape (30) à l'intérieur du logement de soupape (20), l'organe de soupape (30) étant agencé dans le canal de fluide (24) et ayant au moins une position de blocage et une position de déblocage dans laquelle l'organe de soupape (30),
∘ dans la position de blocage, ferme la section de passage (40) empêchant le fluide de s'écouler à travers la section de passage (40) et,
∘ dans la position de déblocage, ouvre la section de passage (40) au moins partiellement permettant au fluide de s'écouler à travers la section de passage (40),
- un moyen d'actionnement (37, 38) couplé mécaniquement à l'organe de soupape pour commander un mouvement de l'organe de soupape (30),
dans laquelle
la soupape (10) a au moins un élément de rayonnement (50) ayant une surface de rayonnement (52) et agencé et configuré pour irradier une portion de surface (41) de la section de passage (40) et/ou une portion de surface (31) de l'organe de soupape (30) avec un rayonnement électromagnétique pour inhiber une propagation de germes dessus,
et dans laquelle
au moins un guide d'onde électromagnétique (60) est relié à l'au moins un élément de rayonnement (50) pour guider le rayonnement électromagnétique vers celui-ci, l'au moins un guide d'onde électromagnétique (60) comprenant une fibre optique ou un guide de lumière liquide,
**caractérisée en ce que** l'au moins un élément de rayonnement (50) est fixé à ou est d'un seul tenant avec une portion de surface (31) de l'organe de soupape (30) dans laquelle l'au moins un guide d'onde électromagnétique (60) s'étend à travers une tige de soupape (32) pour coupler mécaniquement le moyen d'actionnement (37, 38) à l'organe de soupape (30), la tige de soupape (32) étant une tige creuse.

2. Soupape selon la revendication 1,
**caractérisée en ce que**
une portion de surface irradiée (41) de la section de passage (40) et/ou une portion de surface irradiée (31) de l'organe de soupape (30) sont situées dans un écartement entre l'organe de soupape (30) et la section de passage (40) et/ou sur un côté aval de l'organe de soupape (30) par rapport à une direction d'écoulement (25) du fluide.

3. Soupape selon l'une des revendications 1 ou 2,
**caractérisée en ce que**
l'au moins un guide d'onde électromagnétique (60) comprend une surface d'entrée, une surface de sortie et un chemin d'onde électromagnétique reliant la surface de sortie à la surface d'entrée, dans laquelle la surface de sortie est configurée pour fournir à l'au moins un élément de rayonnement (50) le rayonnement électromagnétique et est notamment une portion de surface de l'au moins un élément de rayonnement (50).

4. Soupape selon l'une des revendications 1 à 3,
**caractérisée en ce que**
l'au moins un guide d'onde électromagnétique (60) et l'au moins un élément de rayonnement (50) sont configurés pour guider et faire rayonner une lumière UV, respectivement.

5. Soupape selon l'une des revendications précédentes,
**caractérisée en ce que**
la section de passage (40) et/ou l'organe de soupape (30) comprennent un élément d'étanchéité (70) disposé dans une portion de surface (41) de la section de passage (40) et/ou une portion de surface (31) de l'organe de soupape (30), respectivement, notamment inséré dans une gorge s'étendant dans une portion de surface (41) de la section de passage (40) et/ou une portion de surface (31) de l'organe de soupape (30), respectivement.

6. Soupape selon l'une des revendications précédentes,
**caractérisée en ce que**
la section de passage (40) comprend un siège de soupape (43) ayant une première portion de surface (41) et l'organe de soupape (30) comprend un disque de soupape (33) ayant une seconde portion de surface (31) butant contre la première portion de surface (41) dans la position de blocage fermant ainsi la section de passage (40) et étant distante de la première portion de surface (41) dans la position de déblocage ouvrant ainsi au moins partiellement la section de passage (40).

7. Soupape selon l'une des revendications 1 à 5,
**caractérisée en ce que**
la section de passage (40) est configurée sous forme de cavité symétrique en rotation (44) ayant une première portion de surface (41) et l'organe de soupape (30) comprend un corps de blocage symétrique en rotation (35) qui est accueilli dans la cavité symétrique en rotation (44) et ayant une seconde portion de surface (31) butant contre la première portion de surface (41) dans une position angulaire quelconque du corps symétrique en rotation (35), le corps symétrique en rotation (35) ayant un alésage (36) qui est fermé par la première portion de surface (41) dans la position de blocage et qui est ouvert dans la position de déblocage.

8. Soupape selon la revendication 7,
**caractérisée en ce que**
la cavité symétrique en rotation (44) a une forme sphérique et le corps de blocage symétrique en rotation (35) est une bille ou bien la cavité symétrique en rotation (44) a une forme de cône ou une forme de cône tronqué et le corps de blocage symétrique en rotation (35) est un cône ou un cône tronqué, respectivement.

9. Soupape selon l'une des revendications 1 à 5,
**caractérisée en ce que**
la section de passage (40) a une première portion de surface annulaire (41) et l'organe de soupape (30) comprend un clapet de soupape (34) ayant une seconde portion de surface périphérique (31) butant contre la première portion de surface (41) dans la position de blocage fermant ainsi la section de passage (40) et étant distante de la première portion de surface (41) dans la position de déblocage ouvrant ainsi au moins partiellement la section de passage (40).

10. Procédé pour inhiber une propagation de germes dans une soupape (10) selon l'une des revendications précédentes,
**caractérisé par** les étapes suivantes :
- le rayonnement d'un rayonnement électromagnétique au moyen de l'au moins un élément de rayonnement (50) ;
- l'orientation du rayonnement électromagnétique sur la portion de surface (41) de la section de passage (40) et/ou sur la portion de surface (31) de l'organe de soupape (30) ;
- la liaison de l'au moins un guide d'onde électromagnétique (60) à une source de rayonnement électromagnétique, le guide d'onde électromagnétique (60) s'étendant à travers la tige de soupape creuse de la soupape (10) ;
- l'exploitation de la source de rayonnement électromagnétique pour générer un rayonnement électromagnétique ;
- la concentration et/ou la collimation du rayonnement électromagnétique généré ; et
- le guidage du rayonnement électromagnétique concentré et/ou collimaté vers l'élément rayonnant (50) au moyen de l'au moins un guide d'onde électromagnétique (60).

11. Procédé selon la revendication 10,
**caractérisé par**
l'exploitation de la source de rayonnement électromagnétique en mode pulsé, dans lequel notamment une ou plusieurs périodes définies d'une exploitation continue de la source de rayonnement électromagnétique sont facultativement prévues.

12. Procédé selon l'une des revendications 10 et 11,
**caractérisé par**
la génération d'une lumière UV au moyen d'une source de lumière UV et notamment au moyen d'une diode électroluminescente (DEL) et/ou la concentration de la lumière UV au moyen d'un réflecteur parabolique.
